(19) Europäisches Patentamt

European Patent Office

Office européen des brevets

(11) Veröffentlichungsnummer: **0 449 007 A1**

## (12) EUROPÄISCHE PATENTANMELDUNG

(21) Anmeldenummer: **91103492.4**

(22) Anmeldetag: **07.03.91**

(51) Int. Cl.5: **B41F 13/26**

(30) Priorität: **30.03.90 DE 4010192**

(43) Veröffentlichungstag der Anmeldung:
**02.10.91 Patentblatt 91/40**

(84) Benannte Vertragsstaaten:
**CH DE FR GB IT LI**

(71) Anmelder: **MAN Roland Druckmaschinen AG**
**Christian-Pless-Strasse 6-30**

W-6050 Offenbach/Main(DE)

(72) Erfinder: **Bachmeir, Xaver**
**Schallerstrasse 15a**
**W-8900 Augsburg 1(DE)**
Erfinder: **Prem, Wolgang**
**Bahnhofstrasse 10**
**W-8901 Ustersbach(DE)**

(54) **Vorrichtung zum Durchbiegen einer Walze.**

(57) Eine Vorrichtung zum Durchbiegen einer Walze, insbesondere einer Papierleitwalze einer Druckmaschine, weist eine Achse (1) und einen über Lager drehbar auf der Achse angeordneten zylinderförmigen Mantel (4) auf. Um einen einfachen Aufbau zu erreichen, ist zwischen den Stirnseiten der Umlenkwalze und den Seitenwänden (11) der Druckmaschine je ein Gelenk angeordnet. Jedes Gelenk weist einen fest an der Seitenwand (11) angeschlossenen Halter (9) und eine das Ende der Achse (1) aufnehmende Hülse (5) auf. Die Hülse (5) ist um eine zur Walzenlängsachse (1) senkrechte Achse gegenüber dem Halter (9) schwenkbar gelagert und der Schwenkwinkel zwischen dem Halter und der Hülse ist mittels Stellschrauben (18,19) einstellbar.

FIG.1

EP 0 449 007 A1

Die Erfindung betrifft eine Vorrichtung zum Durchbiegen einer Walze, insbesondere einer Umlenkwalze einer Druckmaschine, die eine feststehende Achse und einen über Lager auf der Achse angeordneten zylinderförmigen Mantel aufweist.

Die in Betrieb sich befindenden beidseitig gelagerten Umlenkwalzen sorgen für die Führung der Bedruckstoffbahn, beispielsweise durch eine Rollendruckmaschine. Dabei üben die Bedruckstoffbahnen je nach Art der Umschlingung einen Zug in Richtung der Winkelhalbierenden auf die Umlenkwalze aus. Daraus resultiert ein Biegemoment, der eine Durchbiegung der Umlenkwalze verursacht. Die Durchbiegung ist in der Mitte stärker als an den Enden. Dadurch wird die Bedruckstoffbahn am Rande der Umlenkwalze stärker gespannt als in der Mitte. Es erhöht sich die Einrißgefahr und die Bedruckstoffbahn wirft beim Lauf durch die Rollendruckmaschine Falten. Eine Voraussetzung zur Erzielung eines guten Druckresultats ist es aber, daß ein faltenfreier Lauf der Bedruckstoffbahn gewährleistet wird.

Ausgehend von dieser Problemstellung ist es Aufgabe der Erfindung, eine sehr einfache und billige, insbesondere für die Massenanfertigung geeignete Vorrichtung zum Durchbiegen einer Walze zu schaffen, mit der einer vorhandenen Walzendurchbiegung entgegengewirkt werden kann.

Diese Aufgabe wird durch Anwendung der Merkmale des Kennzeichens des Patentanspruchs 1 gelöst.

Im folgenden wird die Erfindung anhand eines Ausführungsbeispiels bezugnehmend auf die Zeichnung beschrieben. Es zeigt:

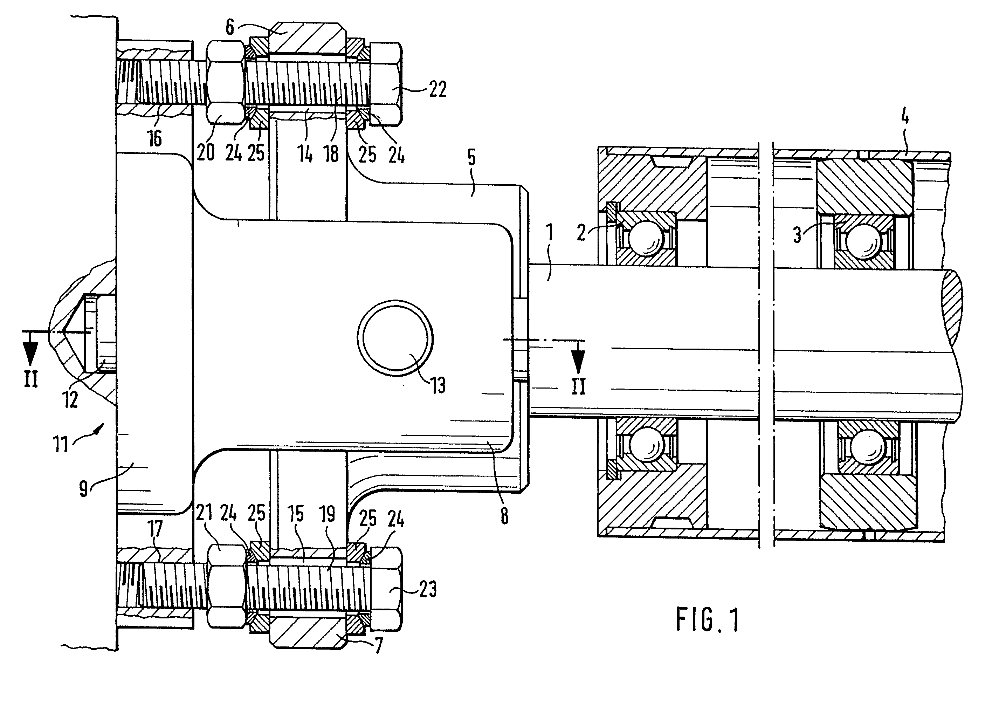

Fig. 1    einen Schnitt durch eine Biegevorrichtung einer Umlenkwalze;

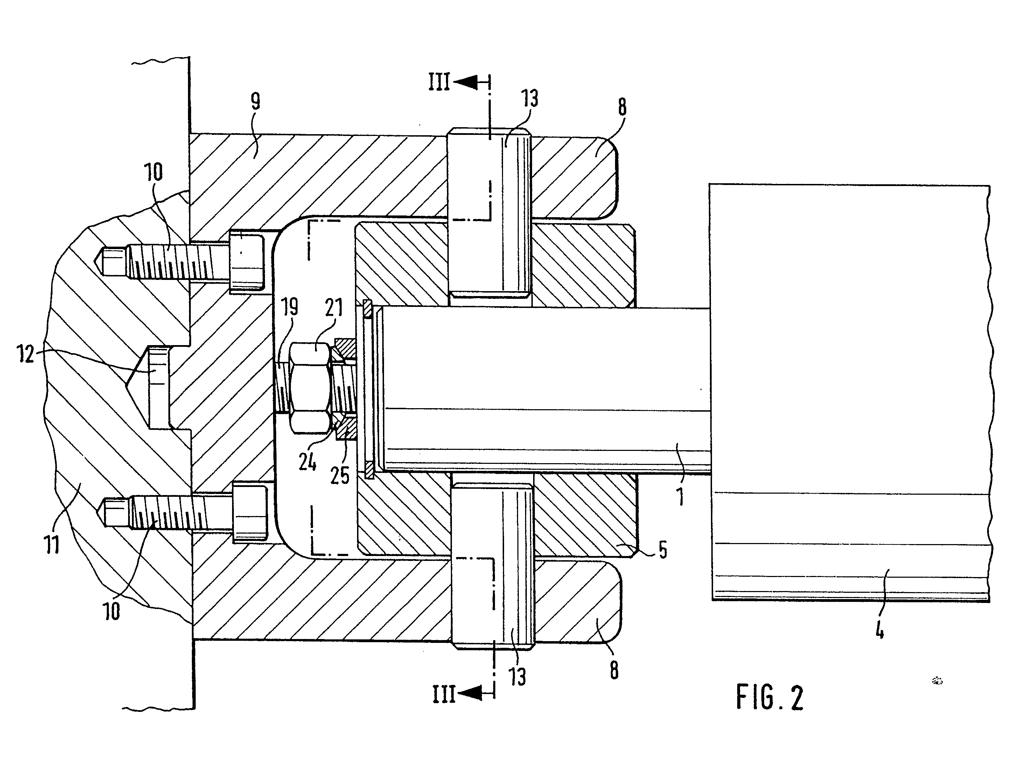

Fig. 2    einen Schnitt entlang der Linie II-II in Fig. 1 und;

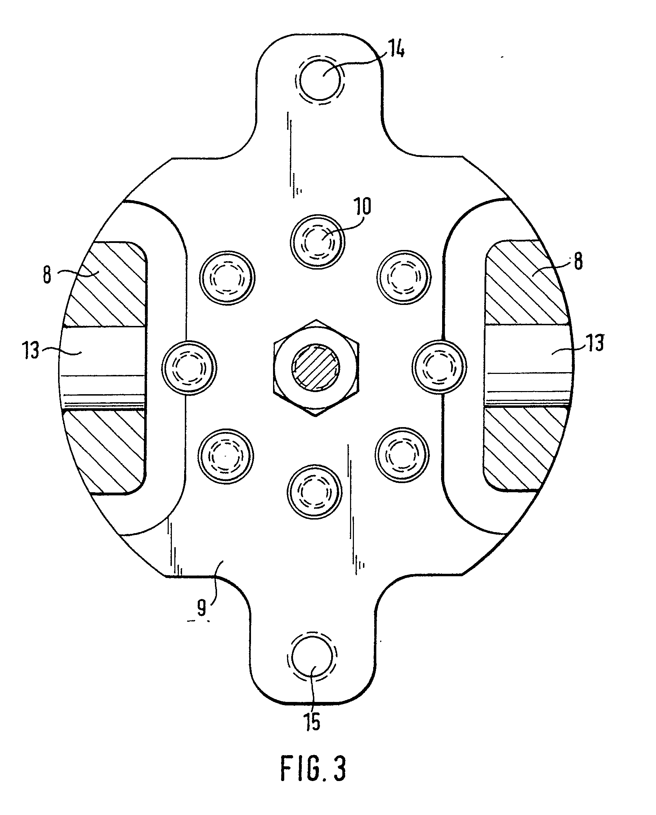

Fig. 3    einen Schnitt entlang der Linien III-III in Fig. 2.

Die Endstücke einer Achse 1 einer Umlenkwalze, die einen über mindestens drei Lager 2, 3, wobei ein Lager 3 um die Mitte der Achse 1 angeordnet ist, auf der Achse 1 drehbar angeordneten zylinderförmigen Mantel 4 aufweist, werden von je einem Gelenk aufgenommen. Jedes Gelenk weist eine Hülse 5 auf, die das Ende der Achse 1 aufnimmt und zwei sich in radialer Richtung erstreckende äußere Ansätze 6, 7 aufweist. Die äußeren Ansätze 6, 7 sind um einen Winkel von 180° zueinander versetzt angeordnet.

Die Hülse 5 ist zwischen zwei eine gabelförmige Ausnehmung bildenden Backen 8 eines Halters 9 angeordnet. Der Halter 9 selbst ist mit acht in gleichmäßigen Abständen voneinander angeordneten Schrauben 10 an einer Seitenwand 11 der Druckmaschine befestigt. Zusätzlich weist der Halter 9 in der Mitte der Seite, die die Seitenwand 11 berührt, einen keilförmigen Zentrieransatz 12 auf, der in die Seitenwand 11 eingreift. In jedem Backen 8 ist das eine Ende eines Bolzens 13 festgelegt. Auf dem anderen Ende jedes Bolzens 13 ist die Hülse 5 drehbar gelagert. Die Mittellängslinien der beiden Bolzen 19 liegen auf einer gemeinsamen Achse, die senkrecht zur Walzenlängsachse verläuft.

Als Alternative ist auch denkbar, bei verkürztem Endstück der Achse 1, einen durchgehenden Bolzen 13 zu verwenden, oder die Bolzen 13 in der Hülse 5 festzulegen und in den Backen 8 drehbar zu lagern.

Durch die beiden äußeren Ansätze 6, 7 der Hülse 5 ist je eine Bohrung 14, 15 eingebracht, die je einem Innengewinde 16, 17 des Halters 9 gegenübersteht. Je eine Stellschraube 18, 19 ist in den Halter 9 eingeschraubt und durchsetzt frei eine Bohrung 14, 15. Zwischen dem Kalter 9 und den äußeren Ansätzen 6, 7 der Hülse 5 sitzt auf den Stellschrauben 18, 19 je eine Mutter 20, 21, der auf der anderen Seite des Ansatzes 6, 7 ein Schraubenkopf 22, 23 der Stellschraube 18, 19 gegenübersteht. Zusätzlich sind zwischen den Muttern 20, 21 und den Schraubköpfen 22, 23 auf jeder Seite der Ansätze 6, 7 je eine Kugelscheibe 24 und eine Kugelpfanne 25 eingesetzt.

Durch Einschrauben der Stellschraube 19 in den Halter 9 und Lösen der Stellschraube 18 dreht die Hülse 5 sich im Uhrzeigersinn um den Bolzen 13, der Hülse 5 und Backen 8 des Halters 9 verbindet. Hierdurch wird die Achse 1 nach unten durchgebogen. Die durch die Verstellung der Hülse 5 auftretenden Querspannungen im Material können mittels Kugelscheibe 24 und Kugelpfanne 25 aufgefangen werden. Am anderen Ende der Umlenkwalze ist ein zweites Gelenk angebracht, das bezüglich Aufbau und Wirkung identisch mit der gezeigten Vorrichtung ist. So kann die Biegekurve der Achse 1 durch voneinander unabhängigem Bedienen der Gelenke beliebig geformt werden. Dies ist besonders beim Fahren von halbbreiten Bahnen von Vorteil. Die Biegung der Achse 1 wird über die Lager 2, 3, hauptsächlich durch das Lager 3 in der Mitte der Längsachse der Walze an den Mantel 3 weitergegeben, so daß sich die ganze Umlenkwalze in gewünschter Richtung durchbiegt. Der gewünschte Betrag der Durchbiegung wird mittels Sichtkontakt mit der laufenden Bedruckstoffbahn bestimmt. Er ist erreicht bei faltenfreiem Lauf der Bedruckstoffbahn.

Bei unterschiedlichem Umschlingungsgrad der Umlenkwalze ändert sich die Richtung des Biegemoments auf die Walze und zwar in Richtung der Winkelhalbierenden der Umschlingung. Um dem Rechnung zu tragen, ist vorgesehen, mittels der radial angeordneten Schrauben 10, die den Halter 9 an der Seitenwand 11 der Druckmaschine halten, das Gelenk des Ausführungsbeispiels in 45° Abständen nachzuführen, damit das Biegemoment, das mittels des Gelenks auf die Umlenkwalze aufgebracht wird, mit der Durchbiegungsrichtung der Walze möglichst weitgehend übereinstimmt und so eine Kompensation erreicht werden kann. Der Zentrierstift 12 des Halters 9 sichert die korrekte Lage an der Seitenwand 11.

**Patentansprüche**

1. Vorrichtung zum Durchbiegen einer Walze, insbesondere einer Papierleitwalze einer Druckmaschine, die eine Achse und einen über Lager drehbar auf der Achse angeordneten zylinderförmigen Mantel aufweist, dadurch gekennzeichnet, daß zwischen den Stirnseiten der Umlenkwalze und den Seitenwänden (11) der Druckmaschine je ein Gelenk angeordnet ist, das einen fest an der Seitenwand (11) angeschlossenen Halter (9) und eine das Ende der Achse (1) aufnehmende Hülse (5) aufweist, die Hülse (5) um eine zur Walzenlängsachse senkrechte Achse gegenüber dem Halter (9) schwenkbar gelagert und der Schwenkwinkel zwischen dem Halter (9) und der Hülse (5) mittels Stellschrauben (18, 19) einstellbar ist.

2. Vorrichtung nach Anspruch 1, dadurch gekennzeichnet, daß die Hülse (5) innerhalb zweier Backen (8) des Halters (9) angeordnet ist und zwischen den Backen (8) je einen radialen Ansatz (6, 7) aufweist, an dem das eine Ende einer Stellschraube (18, 19) angreift, deren anderes Ende in den Halter (9) eingeschraubt ist.

3. Vorrichtung nach Anspruch 2, dadurch gekennzeichnet, daß jede Stellschraube (18, 19) den radialen Ansatz (6, 7) frei durchsetzt und mit ihrem Kopf (22, 23) an der einen Seite sowie mit einer aufgeschraubten Gegenmutter (20, 21) an der anderen Seite des Ansatzes (6, 7) anliegt.

4. Vorrichtung nach Anspruch 3, dadurch gekennzeichnet, daß zwischen dem Kopf (22, 23) jeder Stellschraube (18, 19) und jeder Gegenmutter (20, 21) einerseits und dem radialen Ansatz (6, 7) andererseits je eine Kugelpfanne (25) und je eine Kugelscheibe (24) angeordnet ist.

5. Vorrichtung nach einem der vorangegangenen Ansprüche, dadurch gekennzeichnet, daß der Halter (9) mittels in gleichmäßigen Abständen auf einen Kreis um die Längsmittelachse der Walze angeordneten Schrauben (10) an der Seitenwand (11) befestigbar ist.

FIG.1

EP 0 449 007 A1

FIG. 2

FIG. 3

## EINSCHLÄGIGE DOKUMENTE

EP 91103492.4

| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
|---|---|---|---|
| A | <u>DD - A - 0 153 344</u><br>(M.A.N.-ROLAND DRUCKMASCHINEN AG)<br>* Fig. 1-3; Ansprüche 1-11 *<br>-- | 1-3,5 | B 41 F 13/26 |
| A | <u>FR - A - 2 391 073</u><br>(VER POLYGRAPH)<br>* Fig. 1-2; Ansprüche 1-3 *<br>-- | 1,3 | |
| A | <u>CH - A - 532 474</u><br>(ALBERT-FRANKENTHAL AG)<br>* Fig. 1-2; Kollonne 4 *<br>-- | 1 | |
| A | <u>AT - B - 360 563</u><br>(BUGNONE ALDO)<br>* Fig. 1; Ansprüche 1-5 *<br>-- | 1,2 | |
| A | <u>US - A - 4 461 212</u><br>(GENEY)<br>* Fig. 1-6; Ansprüche 1-3 *<br>-- | 1-3 | |
| A | <u>EP - A3 - 0 290 853</u><br>(M.A.N.-ROLAND DRUCKMASCHINEN AG)<br>---- | 1,2,5 | RECHERCHIERTE SACHGEBIETE (Int Cl⁵)<br><br>B 41 F |

Der vorliegende Recherchenbericht wurde für alle Patentansprüche erstellt.

| Recherchenort | Abschlußdatum der Recherche | Prüfer |
|---|---|---|
| WIEN | 04-04-1991 | CZASTKA |